# EUROPÄISCHE PATENTSCHRIFT

(11) **EP 0 373 415 B1**
(45) Veröffentlichungstag und Bekanntmachung des Hinweises auf die Patenterteilung: **16.03.1994**
(21) Anmeldenummer: 89121950.3
(22) Anmeldetag: 28.11.1989
(51) Int. Cl.: C08L 51/04, C08L 33/08, C08L 57/00, C08L 69/00

(54) **Polymerisatmischung**
Polymer blend
Mélange de polymères

(30) Priorität: 10.12.1988 DE 3841669
(43) Veröffentlichungstag der Anmeldung: 20.06.1990
(73) Patentinhaber: BAYER AG, 51368 Leverkusen (DE)
(72) Erfinder: Leitz, Edgar, Dr., D-4047 Dormagen 1 (DE); Piejko, Karl-Erwin, Dr., D-5060 Bergisch-Gladbach 2 (DE); Lindner, Christian, Dr., D-5000 Köln 91 (DE); Ott, Karl-Heinz, Dr., D-5090 Leverkusen 1 (DE); Braese, Hans-Eberhard, Dipl.-Ing., D-5000 Köln 71 (DE)

(56) Entgegenhaltungen:
- EP-A- 0 074 051
- EP-A- 0 122 516

## Beschreibung

Die Erfindung betrifft Polymerisatmischungen, die sich zur Herstellung von flexiblen alterungsbeständigen Folien mit lederartigem Aussehen eignen und die durch Kalandrieren und Tiefziehen verarbeitet werden können.

Kunststoffolien mit lederartigem Aussehen werden beispielsweise zur Innenverkleidung von Kraftfahrzeugen verwendet. Sie werden meist durch Kalandrieren einer Rohfolie und anschließendes Tiefziehen hergestellt. Als Kunststoff verwendet man meist Polyvinylchlorid im Gemisch mit verschiedenen Vinylpolymerisaten und Weichmachern. Diese Folien sind bei hohen Temperaturen nicht vollständig alterungsstabil, enthalten flüchtige, zur Migration neigende Zusätze sowie Halogen, bedingt durch das in ihnen enthaltene Polyvinylchlorid. Es besteht daher Bedarf an einem Kunststoffmaterial, das kein Polyvinylchlorid (PVC) enthält und für die Herstellung lederartiger Folien geeignet ist.

Gegenstand der Erfindungen sind Mischungen aus:
a. 10-60, insbesondere 20-50 Gew.-Teilen eines Pfropfpolymerisats von
a.1 Gemischen von 20-40 Gew.-% Acrylnitril und 80-60 Gew.-% Styrol, α-Methylstyrol, Alkylmethacrylat oder Mischungen daraus, oder
a.2 Methylmethacrylat, gegebenenfalls gemischt mit bis zu 30 Gew.-% Styrol und/oder Alkylacrylat und/oder bis zu 19 Gew.-% Acrylnitril gepfropft auf
a.3 einen teilchenförmigen hochvernetzten Alkylacrylatkautschuk, der bis zu 30 Gew.-% Diene einpolymerisiert enthalten kann, mit einem mittleren Teilchendurchmesser (d₅₀) von 80-800 nm,
   wobei das Pfropfpolymerisat (a) Kautschukgehalte von 30-80 Gew.-%, bevorzugt 45-65 Gew.-%, besonders bevorzugt 50-60 Gew.-% besitzt,
b. 10-50, insbesondere 10-40 Gew.-Teilen eines teilvernetzten kautschukartigen Copolymerisats aus 5-40 Gew.-% Acrylnitril, Styrol, Alkylmethacrylat oder deren Mischungen und 95-60 Gew.-% Alkylacrylat mit einem Gelgehalt von 20-99 Gew.-%, einem Quellungsindex größer 10, gemessen in Dimethylformamid bei 23°C und einem mittleren Teilchendurchmesser (d₅₀) von 100-600 nm, insbesondere von 100-300 nm,
c. 5-40, insbesondere 10-30 Gew.-Teilen eines unvernetzten Polymerisates von Styrolen, α-Methylstyrolen, Acrylnitril, Methacrylnitril, Estern der Acrylsäure oder Methacrylsäure, Vinyl-C₁-C₄-Carbonsäuren oder Mischungen dieser Monomere mit Staudinger-Indices [η] (in Dimethylformamid bei 23°C gemessen) von 0,3-1,5 dl/g und
d. 1-45, bevorzugt 5-40, besonders bevorzugt 8-30 Gew.-Teilen eines Polymerisats aus einem cyclischen aliphatischen Ester oder einem Copolymerisat aus einem cyclischen aliphatischen Ester und einem cyclischen aliphatischen Carbonat, wobei das Gewichtsverhältnis von Ester zu Carbonat 98:2 bis 40:60 beträgt.

Diese Polymerisatmischungen eignen sich zur Herstellung von weichen, gut dehnbaren Folien - auch mit Lederprägung - durch Tiefziehen.

Die erhaltenen Folien sind alterungsstabil, auch bei hohen Temperaturen. Zur technischen Verarbeitung sind nur wenig Hilfsstoffe (Stabilisatoren, Gleitmittel, Trennmittel etc.) in geringen Mengen erforderlich. Die Folien aus den erfindungsgemäßen Polymerisatmischungen haften besonders gut auf anderen technischen Polymeren, z.B. auf Polyurethan.

Formmassen aus Styrol/Acrylnitril-Copolymerisaten und Pfropfkautschuken sind bekannte.

In der DE-OS 3 129 472 werden z.B. Formmassen aus Styrol/Acrylnitril-Copolymerisaten und Pfropfkautschuken aus Acrylsäureestern als Kautschukgrundlage und Styrol/Acrylnitril-Copolymerisaten als Pfropfhüllen beschrieben. Styrol/Acrylnitril-Copolymerisate im Gemisch mit verschiedenen Pfropfkautschuken auf Polybutadienbasis und auf Acrylat/Butadien-Copolymerisatbasis, bepfropft jeweils mit Styrol und Acrylnitril sind in der DE-OS 3 135 251 beschrieben.

Formmassen aus Styrol/Acrylnitril-Copolymerisaten und speziellen Pfropfkautschuken mit einem mehrschaligen Aufbau beschreibt die DE-OS 3 006 804.

In der DE-OS 2 940 804 sind Mischungen aus Styrol/Acrylnitril-Copolymerisaten und Pfropfkautschuken beschrieben, die zusätzliche Ethylen-Propylen-Co- und Terpolymerisate enthalten.

Styrol-Butadien-Blockcopolymerisate als zusätzliche Komponente beschreibt die DE-OS 3 605 375.

Diese Formmassen werden allgemein zur Herstellung von Formteilen, z.B. Gehäusen von Haushaltsgeräten, verwendet. Sie sind also hart und nicht für die Herstellung von Lederersatzfolie, die eine hohe Weichheit aufweisen muß, geeignet.

Versucht man die bekannten Formmassen durch Erhöhung des Pfropfkautschukanteils weicher zu machen, so erhält man Material mit einem unkomfortablen, gummiartigen Griff mit schlechten Tiefzieheigenschaften, das für die Herstellung von Lederersatzfolie ungeeignet ist.

Die Pfropfpolymerisate a. sind im allgemeinen Emulsionspolymerisate mit Teilchenstruktur. Sie bestehen aus teilchenförmigen Alkylacrylatkautschuken mit einem Gelgehalt von größer 50 Gew.-% und mittleren Teilchendurchmessern (d₅₀) von 80 bis 800 nm als Pfropfgrundlage und darauf pfropfpolymerisierten Monomeren, wie Alkylacrylaten, Alkylmethacrylaten, α-Methylstyrolen, Styrolen, Acrylnitril oder Mischungen daraus.

Die Alkylacrylatkautschuke werden bevorzugt durch vernetzende Copolymerisation von C₂-C₈-Alkylacrylaten und gegebenenfalls bis zu 20 Gew.-% Comonomeren, wie Styrol, Methylmethacrylat, Vinylmethylether Acrylnitril sowie bis zu 4 Gew.-% polyfunktionellen Vinyl-und/oder Allylmonomeren, wie Divinylbenzol, Glykol-bis-acrylat, Bis-acrylamid, Phosphorsäuretriallylester, Zitronensäuretriallylester, Triallylcyanurat, Triallylisocyanurat, Allylester von Acrylsäure oder Methacrylsäure, Maleinsäureallylester, insbesondere Triallylcyanurat oder Triallylisocyanurat, hergestellt. Als Pfropfgrundlagen bevorzugte Acrylatkautschuke besitzen eine bimodale Verteilung der mittleren Teilchendurchmesser. Es handelt sich also vorzugsweise um Gemische von zwei teilchenförmigen Kautschuken, wobei der eine einen mittleren Teilchendurchmesser (d₅₀) von 150 bis 250 nm und der andere einen mittleren Teilchendurchmesser (d₅₀) von 400 bis 600 nm besitzt. Das Gewichtsverhältnis des feinteiligen zum grobteiligen Kautschuk ist 1:2 bis 2:1. In der Verteilungskurve der mittleren Teilchendurchmesser einer Mischung der beiden Kautschuke, die den gleichen oder verschiedenen chemischen Aufbau haben können, befinden sich also zwei Maxima.

Besonders geeignete grobteilige Kautschuke weisen eine Kern-Mantel-Struktur auf (vgl. De-OS 3 006 804).

Besonders bevorzugte Pfropfgrundlagen zur Herstellung der Pfropfpolymerisate a. sind somit Gemische von (größeren) Kautschukteilchen mit Kern/ Mantel-Struktur und (kleineren) Kautschukteilchen ohne Kern/Mantel-Struktur. Die zur Pfropfpolymerisation eingesetzten Kautschukteilchen sind bevorzugt teilvernetzt und besitzen Gelgehalte von 50-98 Gew.-%. Zur Herstellung von a. werden auf Emulsionen der beschriebenen Acrylatkautschuke in Emulsion Vinylmonomere pfropfpolymerisiert, im allgemeinen Mischungen aus 20-40 Gew.-% Acrylnitril und 80-60 Gew.-% Styrol, α-Methylstyrol, Alkylmethacrylat oder Mischungen daraus oder überwiegend Methylmethacrylat, dem bis zu 30 Gew.-% Styrol und/oder Alkylacrylat und/oder bis zu 19 Gew.-% Acrylnitril zugemischt sein kann.

Bevorzugt sind Styrol-Acrylnitril-Mischungen.

Die Pfropfpolymerisate a. enthalten 30-80 Gew.-%, bevorzugt 45-65 Gew.-%, besonders bevorzugt 50-60 Gew.-%, Kautschuk.

Die Vinylmonomere werden bevorzugt mit einer Pfropfausbeute größer 40 Gew.-% pfropfpolymerisiert, d.h. ein großer Teil der Vinylmonomere ist chemisch an den Kautschuk (über kovalente Bindungen) gebunden. Man erhält solch hohe Pfropfausbeuten, wenn man in an sich bekannter Weise mit Redox-Initiatoren arbeitet, bevorzugt Kombinationen aus Hydroperoxid und Ascorbinsäure, gegebenenfalls unter Zusatz von Schwermetallkationen.

Das Copolymerisat b. ist ein wenigstens teilvernetztes kautschukartiges Copolymerisat aus (b.1) 5-40 Gew.-Teilen Acrylnitril, Styrol, C₁-C₆-Alkylmethacrylat (insbesondere C₁-C₃-Alkylmethacrylat) oder deren Mischungen, insbesondere aber aus Acrylnitril und/oder Methylmethacrylat und (b.2) 95-60 Gew.-Teilen Alkylacrylat, insbesondere C₃-C₈-Alkylacrylat sowie 0,05-5 Gew.-%, bezogen auf die Summe b.1 + b.2, einer polyfunktionellen, copolymerisierbaren Polyvinyl- oder Allyl-Verbindung, vorzugsweise Triallylcyanurat, Triallylisocyanurat, Vinylether von Polyolen, Vinyl- oder Allylester polyfunktioneller Carbonsäuren und Bisacrylamide von Diaminen; die Polymerisate b. besitzen Gelgehalte von 20-99 Gew.-%, insbesondere großer 40 Gew.-%, einen Quellenindex größer 10, gemessen in Dimethylformamid bei 23°C und mittlere Teilchendurchmesser (d₅₀) von 100 - 600 nm, insbesondere von 100-300 nm.

Die Copolymerisate b. können in bekannter Weise durch radikalische, wäßrige Emulsionspolymerisation in Gegenwart anionischer, oberflächenaktiver Stoffe bei 40 bis 95°C, insbesondere 55 bis 80°C hergestellt werden.

Die unvernetzten Polymerisate c. sind harzartige Polymerisate oder Copolymerisate aus Styrolen, α-Methylstyrolen, Acrylnitril, Methacrylnitril, Estern der Acrylsäure oder Methacrylsäure, Vinyl-C₁-C₄-carbonsäuren sowie Mischungen aus diesen Monomeren mit Staudinger-Indices [η] als Maß für das Molekulargewicht (in Dimethylformamid bei 23°C gemessen) von 0,3 bis 1,5 dl/g. Bevorzugt sind Copolymerisate aus Styrol oder α-Methylstyrol und Acrylnitril, die gegebenenfalls bis zu 40 Gew.-% Ester der Acrylsäure oder Methacrylsäure, insbesondere Methylmethacrylat oder Butylacrylat enthalten.

Die unvernetzten Polymerisate c. werden nach üblichen Verfahren wie radikalische Polymerisation in Masse, Lösung, Suspension oder Emulsion, bevorzugt durch radikalische Emulsionspolymerisation in Wasser, erhalten.

Polymerisat d. ist ein Polymerisat eines cyclischen aliphatischen Esters der Formel (I) 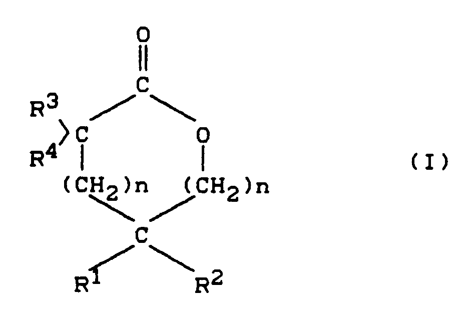
oder ein Copolymerisat eines cyclischen aliphatischen Esters der Formel (I) und eines cyclischen aliphatischen Carbonats der Formel (II) 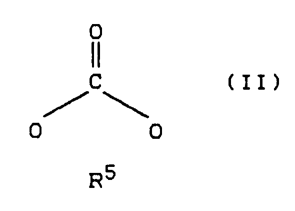
In den Formeln bedeuten:
- R¹, R², R³ und R⁴: in Formel (I) unabhängig voneinander Wasserstoff, C₁-C₆-Alkyl, C₁-C₆-Alkoxy, C₃-C₆-Alkylen, vorzugsweise Wasserstoff, CH₃-, C₂H₅-, m und n in Formel (I) unabhängig voneinander O oder eine ganze Zahl von 1 bis 6.

Bevorzugte Verbindung der Formel (I) ist ε-Caprolacton
- R⁵: in Formel (II)
a. -CH₂-CH₂CH(CH₃)-
b. -CH₂CH₂OCH₂CH₂OCH₂-CH₂-
c. -CH₂CH(CH)₃CH₂CH₂C(CH₃)₂CH₂-
d. 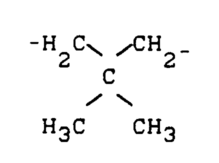
e. 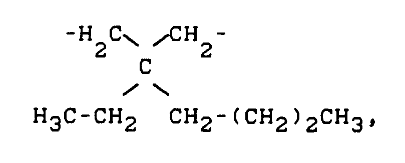
f. -(CH₂)-₃₋₁₀
Bevorzugte Verbindung der Formel (II) ist Neopentylglykolcarbonat.

Die Polymerisate der Formel (I) sind bekannt und beispielsweise in US-PS 3 021 313 und US-PS 2 890 208 beschrieben.

Die Polymerisate der Formel (I) können Molekulargewichte von 10000 g/mol bis 1000000 g/mol, vorzugsweise 15000 g/mol bis 500000 g/mol aufweisen.

Die Copolymerisate aus Verbindungen der Formel (I) und (II) sind bekannt und ihre Herstellung in DE-OS 3 700 193 beschrieben.

Sie weisen sequenzartigen Aufbau gemäß der idealisierten Formel (III) auf

(A-X-B)_{y} (III)

A in Formel (III) ist ein Polymerisat eines cyclischen, aliphatischen Carbonats der Formel (II).

B in Formel (III) ist ein Polymerisat eines cyclischen, aliphatischen Esters der Formel (I).

y in Formel (III) ist eine ganze Zahl von 1 bis 10, bevorzugt 1 bis 5, besonders bevorzugt 1.

X in Formel (III) ist ein Polymerisat, das sowohl das cyclische, aliphatische Carbonat (II) als auch den cyclischen, aliphatischen Ester (I) in polymerisierter Form enthält, wobei die Konzentration des polymerisierten aliphatischen Carbonats (II) jeweils in Richtung auf den Block B und die Konzentration des polymerisierten Esters (I), jeweils in Richtung auf den Block A kontinuierlich abnimmt ("tapered structure").

Die mittleren Molekulargewichte (Gewichtsmittel M̅_{w}) der Blöcke A. und B. in der Formel (III) können gleich oder verschieden sein Die mittleren Molekurlargewichte M̅_{w} für A. liegen zwischen 2000 und 500000 g/mol, vorzugsweise zwischen 5000 und 250000, für B. zwischen 2000 und 500000 g/mol, vorzugsweise zwischen 5000 und 250000 g/mol.

Die erfindungsgemäß verwendeten Copolymerisate d. enthalten 98-40%, bevorzugt 95-50 Gew.-%, cyclische, aliphatische Ester in polymerisierter Form und 60-2 Gew.-%, bevorzugt 50-5 Gew.-%, cyclische, aliphatische Carbonate in polymerisierter Form.

Die Herstellung der Copolymerisate erfolgt durch Lösungspolymerisation in aprotischen organischen Lösungsmitteln, vorzugsweise bei +20°C bis -30°C mit alkalimetallorganischen Verbindungen als Initiatoren.

Die erfindungsgemäße Polymermischung aus a., b., c., und d. läßt sich beispielsweise wie folgt herstellen:

Fallen die Komponenten a. - c. als wäßrige Dispersionen an, so können die Dispersionen im Verhältnis der gewünschten Feststoffe vermischt und gemeinsam, z.B. zu einem Pulver, aufgearbeitet werden. Das Pulver kann gegebenenfalls zu einem Granulat, unter Zusatz konventioneller Hilfsstoffe, verdichtet werden.

Komponente d. wird in bekannten Aggregaten wie Schnecken, Walzen, Knetern oder Pulvermischern mit den Komponenten a., b. und c vermischt.

Die Komponenten a., b und c können auch getrennt aufgearbeitet und dann mit Komponente d. vermischt werden.

Gelgehalte und Quellenindices wurden, wenn nicht anders angegeben, in Dimethylformamid bei 23°C ermittelt (vgl. M. Hoffmann et al., Polymeranalytik II, Georg Thieme Verlag, Stuttgart, 1977). Die Teilchendurchmesser stellen mittlere Teilchendurchmesser (d₅₀) dar (s. dazu "Ultrazentrifugenmessungen", W. Scholtan at al, Kolloidz. u.Z. Polymere 250 (1972) 783-796).

### Beispiele

### Pfropfpolymerisat a.

### Herstellung des Acrylatkautschuks (Pfropfgrundlage).

In einem Reaktor werden vorgelegt:
17232 Gew.-Teile Wasser und 588 Gew.-Teile eines Polybutadienkautschuklatex mit einem Polymerfeststoffgehalt von 42 Gew.-% und einem mittleren Teilchendurchmesser (d₅₀) von 140 nm. Nach Aufheizen auf 63°C gibt man eine Lösung aus 49,2 Gew.-Teile Kaliumperoxodisulfat und 1152 Gew.-Teile Wasser hinzu. Danach werden folgende Mischungen gleichzeitig innerhalb von 5 Stunden bei 63°C in den Reaktor eingespeist.
- Lösung 1:: 36000 Gew.-Teile n-Butylacrylat
81,6 Gew.-Teile Triallylcyanurat
- Lösung 2:: 40800 Gew.-Teile Wasser
384 Gew.-Teile C₁₄-C₁₈-Alkylsulfonsäure Na-Salz
Danach läßt man 4 Stunden bei 63°C auspolymerisieren. Es wird eine Emulsion mit einem Polymerfeststoffgehalt von 37 Gew.-% erhalten. Der mittlere Latexteilchendurchmesser (d₅₀) beträgt 480 nm. Das Polymerisat besitzt einen Gel-Gehalt von 93 Gew.-%.

### Herstellung des Pfropfpolymerisats

In einem Reaktor werden 734 Gew.-Teile Wasser, 4784 Gew.-Teile Latex des Acrylatkautschuks vorgelegt. Es wird 30 min. mit Stickstoff gespült und auf 70°C erhitzt. Unter Rühren wird die folgende Lösung 1 zugegeben.
- Lösung 1:: 190 Gew.-Teile Wasser
6 Gew.-Teile Kaliumperoxodisulfat
3 Gew.-Teile C₁₄-C₁₈-Alkylsulfonsäure Na-Salz
Danach werden die Lösungen 2 und 3 gleichzeitig innerhalb 5 Stunden in den Reaktor bei 70°C eingespeist.
- Lösung 2:: 850 Gew.-Teile Styrol
330 Gew.-Teile Acrylnitril
- Lösung 3:: 1500 Gew.-Teile Wasser
20 Gew.-Teile C₁₄-C₁₈-Alkylsulfonsäure Na-Salz
Man läßt 4 Stunden bei 70°C auspolymerisieren. Es wird eine Emulsion mit einem Polymerfeststoffgehalt von 35 Gew.-% erhalten. Der Kautschukgehalt beträgt 60 Gew.-%.

### Teilvernetztes Copolymerisat b.

### Herstellung des Acrylnitril/n-Butylacrylat-Copolymerisats

In einem Reaktor werden unter Rühren eine Lösung von 2,5 Gew.-Teilen Na-Salz von C₁₄-C₁₈ Alkylsulfonsäuren und 750 Gew.-Teilen Wasser vorgelegt. Nach Aufheizen auf 70°C gibt man 70 Gew.-Teile der Lösung A. (siehe unten) hinzu und initiiert die Polymerisation durch Zugabe einer Lösung von 3,5 Gew.-Teilen Kaliumperoxodisulfat in 50 Gew.-Teilen Wasser. Bei 70°C dosiert man den Rest der Lösung A. sowie die Lösung B. (siehe unten) gleichmäßig innerhalb von 6 Stunden in den Reaktor ein und polymerisiert innerhalb von 4 Stunden aus. Es wird ein Latex mit einem Polymerfeststoffgehalt von 38 Gew.-%, mit einem mittleren Teilchendurchmesser (d₅₀) von 180 nm und einem Gelgehalt (in Dimethylformamid bei 23°C) von 98 Gew.-% erhalten.
- Lösung A:: 1105 Gew.-Teile n-Butylacrylat
7 Gew.-Teile Triallylcyanurat
474 Gew.-Teile Acrylnitril
- Lösung B:: 30 Gew.-Teile Na-Salz von C₁₄-C₁₈-Alkylsulfonsäuren
1790 Gew.-Teile Wasser

### Unvernetztes Polymerisat c.

### Herstellung des Styrol-Acrylnitril-Copolymerisats

In einem Reaktor werden eine Lösung von 6 Gew.-Teilen disproportionierter Abietinsäure, 4 Gew.-Teilen 1-normaler Natronlauge in 3080 Gew.-Teilen Wasser vorgelegt, mit Stickstoff gespült und auf 70°C geheizt. Unter Rühren setzt man 200 Gew.-Teile der Lösung A. (siehe unten) zu und initiiert die Polymerisation unter Zugabe einer Lösung aus 8 Gew.-Teilen Kaliumperoxodisulfat in 200 Gew.-Teilen Wasser. Bei 70°C dosiert man den Rest der Lösung A. und Lösung B. (siehe unten) gleichmäßig innerhalb 5 Stunden in den Reaktor ein.

Man läßt 4 Stunden bei 70°C auspolymerisieren. Es wird eine Emulsion mit einem Polymerfeststoffgehalt von 33 Gew.-% erhalten. Das isolierte Polymerisat besitzt einen Staudinger-Index (η] von 0,7 dl/g (in Dimethylformamid bei 23°C).
- Lösung A:: 1944 Gew.-Teile Styrol
756 Gew.-Teile Acrylnitril
2,6 Gew.-Teile tert. Dodecylmercaptan
- Lösung B:: 54 Gew.-Teile disproportionierte Abietinsäure
40 Gew.-Teile 1-normale Natronlauge
2050 Gew.-Teile Wasser

### Polymerisat d.

### Bestandteil d.1

### Herstellung von Poly-ε-caprolacton

Zu einer Lösung von 1800 g ε-Caprolacton in 10 l Toluol werden bei 15°C 10 ml n-Butyllithium (2,5 molare Lösung in Hexan) unter Rühren und unter Stickstoff gegeben. Die Polymerisationszeit beträgt bei dieser Temperatur 60 min. Dem Reaktionsgemisch werden dann 100 ml Methanol / 1 molare Phosphorsäure (1:1) zugesetzt. Das Polymerisat wird in Methanol gefällt, durch Filtration isoliert, mit 0,5 Gew.-% Phosphorigsäureester des Bis-(2-hydroxy-3-cyclohexyl-5-methyl-phenyl)methans und 0,2 Gew-% 2,6-Di-tert.-butyl-4-methylphenol) stabilisiert und getrocknet.

Ausbeute: 1615 g (89,7 %)
- ηᵣₑₗ:: 7,9 (gemessen in CH₂Cl₂ bei 20°C an einer 2-gew.-%igen Lösung)

### Bestandteil d.2

### Poly-ε-caprolacton

Tone P 700, Union Carbide Cooperation
- ηᵣₑₗ:: 3,0 (gemessen in CH₂Cl₂ bei 20°C an einer 2-gew.-%igen Lösung)

### Bestandteil d.3

### Herstellung eines Copolymerisats aus ε-Caprolacton und Neopentylglykolcarbonat

Zu einer Lösung von 1800 g ε-Caprolacton und 200 g Neopentylglykolcarbonat in 10 l Toluol werden bei 15°C 20 ml n-Butyllithium (2,5 molare Lösung in Hexan) unter Rühren und unter Stickstoff gegeben. Die Polymerisationszeit beträgt bei dieser Temperatur 60 min. Dem Reaktionsgemisch werden dann 100 ml Methanol / 1 molare Phosphorsäure (1:1) zugesetzt. Das Polymerisat wird in Methanol gefüllt, durch Filtration isoliert und getrocknet.

Ausbeute: 1810 g (90,5 %)
Zusammensetzung nach 1H-NMR-Analyse:
Neopentylglykolcarbonat: 9,9 Gew.-%
ε-Caprolacton 90,1 Gew.-%
- ηᵣₑₗ:: 8,9 (gemessen in CH₂Cl₂ bei 20°C an einer 2-gew.-%igen Lösung)

### Herstellung und Eigenschaften der Polymerisatmischungen

Zur Herstellung der Polymerisatmischungen werden die Latices der Bestandteile a., b. und c. so vermischt, daß die Feststoffanteile, die in Tabelle 1 aufgeführten Zusammensetzungen der Polymerisatmischungen ergeben. Die Latexmischungen werden mit 1 Gew.-% (bezogen auf Feststoff) eines phenolischen Stabilisator versetzt und mit wäßriger Magnesiumsulfatlösung koaguliert. Die primär erhaltenen Pulver werden abfiltriert, gewaschen und bei 60°C getrocknet. Die Pulver werden mit Bestandteil d. entsprechend Tabelle 1 und 0,4 Gew.-% Esterwachs auf einem Mischwalzwerk 10 min. bei 190°C homogenisiert und bei 200°C zu Prüfkörpern verpreßt. Die Eigenschaften der Prüfkörper sind in Tabelle 2 und 3 aufgelistet.

### Prüfmethoden:

- Zugfestigkeit:: DIN 53 455
- Dehnung:: DIN 53 455
- Weiterreißfestigkeit:: DIN 53 515
- Shore-Härte:: DIN 53 505 / Typ D
- Vicat-Temperatur:: Verfahren A
- Schmelzindex MFI:: DIN 53 735

### Tiefziehversuch

Eine auf die Walze hergestellte Folie (Länge 300 nm, Breite 300 mm, Dicke 1 mm) wird in eine Tiefziehform eingespannt und auf 160°C bzw. 175°C Oberflächentemperatur erhitzt (Bestimmung der Oberflächentemperatur mittels Schmelzsalz). Ein Kegelstumpf wird unter Anlegen eines Vakuums 21 cm tief in die Folie hineingedrückt.

### Beurteilung

- +: Es wird bei 160°C und bei 175°C Oberflächentemperatur ein dem Kegelstumpf entsprechender Hohlkörper gleichmäßiger Wandstärke erhalten.
- -: Die Folie reißt.

### Vergleich der Alterungsstabilität der erfindungsgemäßen Polymerisatmischungen 3.1-3.5 mit bekannten Polyvinylchlorid-haltigen Tiefziehformmassen

Folien aus den Materialien werden bei 130°C und 150°C 21 Tage gelagert. Während sich die polyvinylchloridhaltigen Folien dunkelbraun bis schwarz verfärben, verändert sich die Farbe der erfindungsgemäßen Folien praktisch nicht.

**Tabelle 1**

| Zusammensetzung der Polymermischungen | | | | | | |
|---|---|---|---|---|---|---|
| Versuch Nr. | **Bestandteile** | | | | | |
| | a | b | c | d₁ | d₂ | d₃ |
| | (Gew.-Teile) | | | | | |
| 1 | 40 | 20 | 25 | 15 | - | - |
| 2 | 40 | 20 | 20 | - | - | 20 |
| 3 | 40 | 20 | 25 | - | - | 15 |
| 4 | 40 | 20 | 25 | - | 15 | - |
| 5 | 40 | 40 | 20 | - | 2,5 | - |
| 6 | 40 | 40 | 20 | - | 5 | - |
| 7 | 40 | 40 | 20 | - | 7,5 | - |
| 8 [Vergleich] | 40 | 40 | 20 | - | - | - |

**Tabelle 2**

| Eigenschaften der Mischungen aus Tabelle 1 | | | | | | |
|---|---|---|---|---|---|---|
| Versuch Nr. | Zugfestigkeit [MPa] | Dehnung [%] | Weiterreißfestigkeit [N/mm²] | Shore-Härte [15"] | Vicat A [°C] | Tiefziehverhalten |
| 1 | 14,7 | 299 | 47 | 30 | 35 | + |
| 2 | 13,8 | 277 | 60 | 40 | 45 | + |
| 3 | 19 | 315 | 47 | 30 | 39 | + |
| 4 | 12,5 | 276 | 43 | 24 | 32 | + |

**Tabelle 3**

| Eigenschaften der Mischungen aus Tabelle 1 | | | |
|---|---|---|---|
| Versuch Nr. | Dehnung [%] | Shore-Härte [15"] | MFI bei 220°C [g/10 min] |
| 5 | 231 | 40 | 1.93 |
| 6 | 258 | 40 | n.b.* |
| 7 | 271 | 37 | n.b.* |
| 8 [Vergleich] | 202 | 39 | 0,45 |

| | | | |
|---|---|---|---|
| ^{*)} n.b. = nicht bestimmt | | | |

## Patentansprüche

1. Polymerisatmischungen aus
a. 10-60 Gew.-Teilen eines Pfropfpolymerisats von
a.1 Gemischen von 20-40 Gew.-% Acrylnitril und 80-60 Gew.-% Styrol, α-Methylstyrol, Alkylmethacrylat oder Mischungen daraus, oder
a.2 Methylmethacrylat, gegebenenfalls gemischt mit bis zu 30 Gew.-% Styrol und/oder Alkylacrylat und/oder bis zu 19 Gew.-% Acrylnitril gepfropft auf
a.3 einen teilchenförmigen hochvernetzten Alkylacrylatkautschuk, der bis zu 30 Gew.-% Diene einpolymerisiert enthalten kann, mit einem mittleren Teilchendurchmesser (d₅₀) von 80-800 nm,
wobei das Pfropfpolymerisat a einen Kautschukgehalt von 30-80 Gew.-% besitzt,
b. 10-50 Gew.-Teilen eines teilvernetzten kautschukartigen Copolymerisats aus 5-40 Gew.-% Acrylnitril, Styrol, Alkylmethacrylat oder deren Mischungen und 95-60 Gew.-% Alkylacrylat mit einem Gelgehalt von 20-99 Gew.-% einem Quellenindex größer 10, gemessen in Dimethylformamid bei 23°C und einem mittleren Teilchendurchmesser (d₅₀) von 100-600 nm,
c. 540 Gew.-Teilen eines unvernetzten Polymerisates von Styrolen, α-Methylstyrolen, Acrylnitril, Methacrylnitril, Ester der Acrylsäure oder Methacrylsäure, Vinyl-C₁-C₄-Carbonsäuren oder Mischungen dieser Monomere mit Staudinger-Indices [η] (in Dimethylformamid bei 23°C gemessen) von 0,3-1,5 dl/g und
d. 1-45 Gew.-Teilen eines Polymerisats eines cyclischen aliphatischen Esters oder eines aliphatischen cyclischen Esters und eines aliphatischen cyclischen Carbonats.

2. Polymerisatmischungen nach Anspruch 1., in denen Komponente d. Poly-ε-caprolacton ist.

3. Polymerisatmischungen nach Anspruch 1., in denen Komponente d. ein Copolymerisat aus ε-Caprolacton und Neopentylglykolcarbonat ist, wobei das Gewichtsverhältnis von ε-Caprolacton zu Neopentylglykolcarbonat 98:2 bis 40:60 beträgt.

4. Verwendung der Polymerisatmischungen nach Anspruch 1. zur Herstellung von tiefziehbaren, flexiblen Folien.

## Claims

1. Polymer mixtures of
a. 10 - 60 % by weight of a graft polymer of
a.1 mixtures of 20 - 40 % by weight of acrylonitrile and 80 - 60 % by weight of styrene, α-methyl styrene, alkyl methacrylate or mixtures thereof or
a.2 methyl methacrylate, optionally mixed with up to 30 % by weight of styrene and/or alkyl acrylate and/or up to 19 % by weight of acrylonitrile grafted on
a.3 a particulate, highly cross-linked alkyl acrylate rubber which may contain up to 30 % by weight of dienes incorporated by polymerisation and has an average particle diameter (d₅₀) of 80 - 800 nm,
the graft polymer a. having a rubber content of 30 - 80 % by weight,
b. 10 - 50 parts by weight of a partially cross-linked rubber-like copolymer of 5 - 40 % by weight of acrylonitrile, styrene, alkyl methacrylate or mixtures thereof and 95 - 60 % by weight of alkyl acrylate having a gel content of 20 - 99 % by weight, a swelling index greater than 10, measured in dimethyl formamide at 23°C, and an average particle diameter (d₅₀) of 100 - 600 nm,
c. 5 - 40 parts by weight of an uncross-linked polymer of styrenes, α-methyl styrenes, acrylonitrile, methacrylonitrile, esters of acrylic acid or methacrylic acid, vinyl-C₁-C₄-carboxylic acids or mixtures of these acids having Staudinger indices (η) (determined in dimethyl formamide at 23°C) of 0.3-1.5 dl/g and
d. 1 - 45 parts by weight of a polymer of a cyclic aliphatic ester or of an aliphatic cyclic ester and of an aliphatic cyclic carbonate.

2. Polymer mixtures according to claim 1, in which component d. is poly-ε-caprolactone.

3. Polymer mixtures according to claim 1 , in which component d. is a copolymer of ε-caprolactone and neopentylglycol carbonate, the ratio by weight of ε-caprolactone to neopentyl glycol carbonate being from 98 : 2 to 40 : 60.

4. Use of the polymer mixtures according to claim 1 for the production of deep drawable, flexible films.

## Revendications

1. Mélanges de polymères, comprenant
a. 10 à 60 parties en poids d'un polymère greffé
a.1 de mélanges de 20 à 40 % en poids d'acrylonitrile et de 80 à 60 % en poids de styrène et d'α-méthylstyrène, de méthacrylate d'alkyle ou de mélanges de ces composants, ou bien
a.2 de méthacrylate de méthyle, le cas échéant en mélange avec jusqu'à 30 % en poids de styrène et/ou d'acrylate d'alkyle et/ou jusqu'à 19 % en poids d'acrylonitrile greffé sur
a.3 un caoutchouc d'acrylate d'alkyle fortement réticulé en particules, qui peut contenir jusqu'à 30 % en poids de diènes incorporés par polymérisation, avec un diamètre moyen (d₅₀) des particules de 80 à 800 nm,
le polymère greffé a. ayant une teneur en caoutchouc de 30 à 80 % en poids,
b. 10 à 50 parties en poids d'un copolymère de type caoutchouc partiellement réticulé constitué de 5 à 40 parties en poids d'acrylonitrile, de styrène, de méthacrylate d'alkyle ou de mélanges de ces monomères, et de 95 à 60 % en poids d'acrylate d'alkyle ayant une teneur en gel de 20 à 99 % en poids, un indice de gonflement supérieur à 10, mesuré dans le diméthylformamide à 23°C, et un diamètre moyen (d₅₀) des particules de 100 à 600 nm,
c. 5 à 40 parties en poids d'un polymère non réticulé de styrènes, d'α-méthylstyrènes, d'acrylonitrile, de méthacrylonitrile, d'esters d'acide acrylique ou d'acide méthacrylique, d'acides vinyl-carboxyliques en C₁ à C₄ ou de mélanges de ces monomères présentant des indices de Staudinger [η] (mesurés dans le diméthylformamide à 23°C de 0,3 à 1,5 dl/g et
d. 1 à 45 parties en poids d'un polymère d'un ester aliphatique cyclique ou d'un ester cyclique aliphatique ou d'un carbonate cyclique aliphatique.

2. Mélanges de polymères suivant la revendication 1, dans lesquels le composant d. est une poly-ε-caprolactone.

3. Mélanges de polymères suivant la revendication 1, dans lesquels le composant d. est un copolymère d'ε-caprolactone et de carbonate de néopentylglycol, le rapport en poids de l'ε-caprolactone au carbonate de néopentylglycol ayant une valeur de 98:2 à 40:60.

4. Utilisation des mélanges de polymères suivant la revendication 1 pour la production de feuilles flexibles pouvant être embouties.
